# EUROPEAN PATENT APPLICATION

(11) **EP 2 053 456 A1**
(43) Date of publication of application: **29.04.2009**
(21) Application number: 07831614.8
(22) Date of filing: 12.11.2007
(51) Int. Cl.: G02F 1/1337, G02F 1/13, G02F 1/1333, G02F 1/13363, G02F 1/1343

(54) **LIQUID CRYSTAL DISPLAY PANEL AND LIQUID CRYSTAL DISPLAY PANEL MANUFACTURING METHOD**

(30) Priority: 21.11.2006 JP 2006314113
(71) Applicant: Sony Corporation, Tokyo 108-0075 (JP)
(72) Inventor: TAMAKI, Masaya, Tokyo 108-0075 (JP)
(74) Representative: Müller - Hoffmann & Partner
(86) International application number: PCT/JP2007/071884
(87) International publication number: WO 2008/062682

(57) **Abstract**

The present invention relates to a liquid crystal display panel and a fabrication method for a liquid crystal display apparatus and makes it possible to assure high productivity when compared with related art apparatus and methods and assure sufficient anchoring strength and picture quality. In the present invention, the shape of a face on which an orientation film 13 is produced is set as a groove shape wherein a groove M extending in a predetermined direction is formed repetitively in a perpendicular direction to provide orientation ability to the orientation film 13.

## Description

### Technical Field

This invention relates to a liquid crystal display panel and a fabrication method for a liquid crystal display apparatus and can be applied to a liquid crystal mode such as TN (Twisted Nematic), ECB (Electrically Controlled birefringence), STN (Super Twisted Nematic) and IPS (In-Plane Switching) modes. The present invention makes it possible to assure high productivity and sufficient anchoring strength and picture quality when compared with related art apparatus and methods by providing a lower face of an orientation film with a groove shape to provide orientation ability to the orientation film.

### Background Art

Conventionally, in liquid crystal display panels of various liquid crystal modes such as TN, ECB, STN and IPS modes, liquid crystal molecules are oriented to a fixed direction by an orientation process, and various techniques have been proposed for this orientation process.

Here, a rubbing method which is one of such orientation processes is a method used most frequently, and orientation ability is applied to an orientation film formed from a high molecular film made of polyimide or the like by forming the orientation film on transparent electrodes and rubbing the orientation film in a fixed direction by means of a roller having a cloth or the like attached to the surface thereof. However, with the rubbing method, there is the possibility that rubbing waste may stick to and pollute the surface of the orientation film, and also there is the possibility that TFTs (thin film transistors) may be broken down by generation of static electricity.

A grating method which is an orientation processing method used in place of the rubbing method works an orientation film on the surface of a substrate to form gratings (grooves) and makes use of elastic deformation by the gratings to orient liquid crystal molecules. In the grating method, liquid crystal molecules are oriented in a parallel direction along the gratings in which elastic free energy is most stable.

In regard to this grating method, a method has been proposed in M. Nakamura et al. J. Appl. Phys. 52, 210 (1981) wherein light is irradiated upon photosensitive polymer which forms an orientation film to form gratings linearly at fixed distances. Meanwhile, in the official gazette of Japanese Patent Laid-Open No. Hei 11-218763, a method is proposed wherein light is irradiated upon photopolymerizable monomer on a substrate to form an orientation film with gratings. Further, in the official gazette of Japanese Patent Laid-Open No. 2000-105380, a method is proposed wherein a transfer technique is applied to form concave and convex shapes of gratings on a resin application film formed on the surface of a substrate to form an orientation film with gratings.

It is known that, according to this grating method, anchoring energy can be controlled by adjustment of the pitch and the height of the gratings (Y. Ohta et al., J. J. Appl. Phys., 43, 4310 (2004)).

Further, in regard to the grating method, also a method is proposed wherein the orientation regulating force which the orientation film itself of polyimide or the like has is utilized to improve anchoring strength. In particular, in the official gazette of Japanese Patent Laid-Open No. Hei 5-88177, a method is proposed wherein photosensitive polyimide is patterned by a photolithography method. In the official gazette of Japanese Patent Laid-Open No. Hei 8-114804, a method is proposed wherein a concave and convex shape whose surface shape is a striped shape in a predetermined direction and is a sawtooth shape in a direction perpendicular to the predetermined direction is formed on the surface of a first orientation film and organic substance whose molecular axes are directed in the perpendicular direction is layered on the first orientation film to form another orientation film. Further, in the official gazette of Japanese Patent Laid-Open No. Hei 3-209220, a method is proposed wherein photosensitive glass is photo-etched to form a concave and convex shape on the surface thereof and then an orientation material is applied.

Incidentally, according to the grating method, pollution of the orientation film surface or generation of static electricity by the rubbing method can be prevented.

However, where only an elastic deformation effect according to the grating method is merely utilized to orient liquid crystal molecules, in order to achieve anchoring strength of a level equal to that of the rubbing method, it is necessary to make the ratio T (= H/P) between the pitch P and the height H of the grooves sufficiently high. In particular, according to Y. Ohta et al., J. J. Appl. Phys., 43, 4310 (2004), in order to obtain a level of azimuth angle anchoring strength (approximately 1 × 10⁻⁴ [J/m²]) substantially equal to that of an orientation film produced through a rubbing process, it is necessary to make the ratio T between the pitch P and the height H of the grooves equal to 1 or more. Accordingly, since the pitch of gratings estimated to be practically used is 1 [µm] or more, in order to assure sufficient azimuth angle anchoring strength, where only the elastic deformation effect is utilized to orient liquid crystal molecules, it is necessary to make the depth of gratings equal to 1 [µm] or more. Here, in a liquid crystal display panel, since the cell gap is approximately 3 to 4 [µm], if the depth of the gratings is 1 [µm] or more, then periodic concaves and convexes having a depth of 1 [µm] or more are formed on a panel face, and the retardation varies within the panel face and it is difficult to sufficiently assure the contrast ratio. Further, where the productivity is taken into consideration, it is desired to make the depth of gratings smaller than 1 [µm] to assure sufficient anchoring strength.

Consequently, where only the elastic deformation effect is merely utilized to orient liquid crystal molecules by a grating method, there is a problem that it is still insufficient in practical use in terms of assurance of sufficient anchoring strength.

In the meantime, according to the method wherein the orientation regulating force which the orientation film material itself has is utilized to improve the anchoring strength, it is estimated that, even if the depth of gratings is made smaller than 1 [µm], sufficient anchoring strength is assured.

However, the technique disclosed in the official gazette of Japanese Patent Laid-Open No. Hei 5-88177 has a problem in that only a material having a photosensitive property can be applied to the orientation film but a material which has been heretofore used stably in production and is superior in the heat resisting property, mechanical strength, chemical stability and voltage holding characteristic cannot be used. Meanwhile, the technique disclosed in the official gazette of Japanese Patent Laid-Open No. Hei 8-114804 has a problem in that, since it is necessary to form the orientation film in a layered structure, the fabrication process is complicated and the productivity is degraded. Further, the technique disclosed in the official gazette of Japanese Patent Laid-Open No. Hei 3-209220 has a problem in that the method of adjusting the direction of high-molecular chains of an orientation film is not precise and consequently the method is still insufficient in practical use.
Patent Document 1: official gazette of Japanese Patent Laid-Open No. Hei 11-218763
Patent Document 2: official gazette of Japanese Patent Laid-Open No. 2000-105380
Patent Document 3: official gazette of Japanese Patent Laid-Open No. Hei 5-88177
Patent Document 4: official gazette of Japanese Patent Laid-Open No. Hei 8-114804
Patent Document 5: official gazette of Japanese Patent Laid-Open No. Hei 3-209220
Non-Patent Document 1: M. Nakamura et al. J. Appl. Phys. 52, 210 (1981)
Non-Patent Document 2: Y. Ohta et al., J. J. Appl. Phys., 43, 4310 (2004)

### Disclosure of Invention

### Technical Problem

The present invention has been made taking the foregoing into consideration and provides a liquid crystal display panel and a fabrication method for a liquid crystal display panel which solve such problems as described above at once and which are high in productivity when compared with the related art apparatus and methods and can assure sufficient anchoring strength and picture quality.

### Technical Solution

In order to solve the subject described above, the invention of claim 1 is applied to a liquid crystal display panel wherein liquid crystal is held between two substrates opposing to each other, wherein at least one of the two substrates is formed such that the shape of a face thereof on which an orientation film is produced is a groove shape wherein a groove extending in a predetermined direction is formed repetitively in a direction perpendicular to the predetermined direction, and the groove shape is covered with a high-molecular film to form the orientation film whose high-molecular chains are adjusted to the perpendicular direction.

The invention of claim 18 is applied to a liquid crystal display panel wherein liquid crystal is held between two substrates opposing to each other, wherein at least one of the two substrates is formed such that the shape of a face thereof on which an orientation film is produced is a groove shape wherein a groove extending in a predetermined direction is formed repetitively in a direction perpendicular to the predetermined direction, and the groove shape is covered with a high-molecular film to form the orientation film which orients molecules of the liquid crystal to the perpendicular direction.

The invention of claim 34 is applied to a liquid crystal display panel wherein liquid crystal is held between two substrates opposing to each other, wherein at least one of the two substrates includes an insulating substrate, and an orientation film for a phase difference plate having a face on which a groove extending in a predetermined direction is formed repetitively in a direction perpendicular to the predetermined direction and which is covered with a high-molecular film such that high-molecular chains are adjusted to the perpendicular direction and a phase difference plate formed from liquid crystal oriented in a direction determined by the orientation film for the phase difference plate are successively formed on the insulating substrate.

The invention of claim 35 is applied to a liquid crystal display panel wherein liquid crystal is held between two substrates opposing to each other, wherein at least one of the two substrates includes an insulating substrate, and an orientation film for a phase difference plate having a face on which a groove extending in a predetermined direction is formed repetitively in a direction perpendicular to the predetermined direction and which is covered with a high-molecular film and a phase difference plate formed from liquid crystal whose molecules are oriented to the perpendicular direction are successively formed on the insulating substrate.

The invention of claim 36 is applied to a fabrication method for a liquid crystal display panel wherein liquid crystal is held between two substrates opposing to each other, wherein the fabrication method for a liquid crystal display panel comprises a groove working step of working at least one of the two substrates such that the shape of a face thereof on which an orientation film is to be produced is a groove shape wherein a groove extending in a predetermined direction is formed repetitively in a direction perpendicular to the predetermined direction, and an orientation film production step of covering the groove shape with a high-molecular film to form the orientation film whose high-molecular chains are adjusted to the perpendicular direction.

The invention of claim 37 is applied to a fabrication method for a liquid crystal display panel wherein liquid crystal is held between two substrates opposing to each other, wherein the two substrates include an electrode and an orientation film successively formed on an insulating substrate, and the fabrication method for a liquid crystal display panel comprises a groove working step of working at least one of the two substrates such that the shape of a face thereof on which the orientation film is to be produced is a groove shape wherein a groove extending in a predetermined direction is formed repetitively in a direction perpendicular to the predetermined direction, and an orientation film production step of covering the groove shape with a high-molecular film to form the orientation film which orients molecules of the liquid crystal to the perpendicular direction.

The invention of claim 38 is applied to a fabrication method for a liquid crystal display panel wherein liquid crystal is held between two substrates opposing to each other, wherein at least one of the two substrates includes an orientation film for a phase difference plate and a phase difference plate successively provided on a transparent substrate, and the fabrication method for a liquid crystal display panel comprises a groove working step of working the one substrate such that the shape of a face thereof on which the orientation film is to be produced is a groove shape wherein a groove extending in a predetermined direction is formed repetitively in a direction perpendicular to the predetermined direction, an orientation film production step of covering the groove shape with a high-molecular film to form the orientation film for a phase difference plate whose high-molecular chains are adjusted to the perpendicular direction, a liquid crystal arranging step of arranging liquid crystal on the orientation film of the phase difference plate, and a solidifying step of solidifying the liquid crystal.

The invention of claim 39 is applied to a fabrication method for a liquid crystal display panel wherein liquid crystal is held between two substrates opposing to each other, wherein at least one of the two substrates includes an orientation film and a phase difference plate successively provided on a transparent substrate, and the fabrication method for a liquid crystal display panel comprises a groove working step of working the one substrate such that the shape of a face thereof on which the orientation film is to be produced is a groove shape wherein a groove extending in a predetermined direction is formed repetitively in a direction perpendicular to the predetermined direction, an orientation film production step of covering the groove shape with a high-molecular film to form the orientation film for the phase difference plate, a liquid crystal arranging step of arranging liquid crystal, whose molecules are oriented to the perpendicular direction, on the orientation film of the phase difference plate, and a solidifying step of solidifying the liquid crystal.

The invention of claim 40 is applied to a liquid crystal display panel wherein liquid crystal is held between two substrates opposing to each other, wherein at least one of the two substrates is formed such that the shape of a face thereof on which an orientation film is produced is a groove shape wherein a groove extending in a predetermined direction is formed repetitively in a direction perpendicular to the predetermined direction, and the groove shape is covered with a high-molecular film to form the orientation film whose high-molecular chains are adjusted to the predetermined direction.

The invention of claim 41 is applied to a liquid crystal display panel wherein liquid crystal is held between two substrates opposing to each other, wherein at least one of the two substrates is formed such that the shape of a face thereof on which an orientation film is produced is a groove shape wherein a groove extending in a predetermined direction is formed repetitively in a direction perpendicular to the predetermined direction, and the groove shape is covered with a high-molecular film to form the orientation film which orients molecules of the liquid crystal to the perpendicular direction.

In the orientation film formed such that a groove shape wherein a groove extending in a predetermined direction is formed repetitively in a perpendicular direction is covered with a high-molecular film according to the configuration of claim 1, 18, 36 or 37, high molecules are adjusted to the direction perpendicular to the extension direction of the grooves by expansion and contraction by heat treatment upon production thereby to assure orientation ability. Consequently, according to the configuration of claim 1, 18, 36 or 37, high productivity can be assured to produce an orientation film by simple and easy steps. With the orientation ability assured in this manner here, even if the depth of the grooves is not made deep, liquid crystal molecules can be oriented by sufficient anchoring strength, and the problems of the related art apparatus and methods can be solved at a time to assure high productivity when compared with that of the related art apparatus and methods and assure sufficient anchoring strength and picture quality.

In the orientation film for a phase difference plate formed such that a face thereof on which a groove extending in a predetermined direction is formed repetitively in a perpendicular direction is covered with a high-molecular film according to the configuration of claim 34, 35, 38 or 39, high molecules are adjusted to the direction perpendicular to the extension direction of the grooves by expansion and contraction by heat treatment upon production thereby to assure orientation ability. Consequently, according to the configuration of claim 34, 35, 38 or 39, high productivity can be assured to produce an orientation film by simple and easy steps. Further, the orientation film for a phase difference plate can be utilized to produce a phase difference plate.

In the orientation film formed such that a groove shape wherein a groove extending in a predetermined direction is formed repetitively in a perpendicular direction is covered with a high-molecular film according to the configuration of claim 40 or 41, high molecules are adjusted to the predetermined direction by expansion and contraction by heat treatment upon production thereby to assure orientation ability. Consequently, according to the configuration of claim 40 or 41, high productivity can be assured to produce an orientation film by simple and easy steps. With the orientation ability assured in this manner here, even if the depth of the grooves is not made deep, liquid crystal molecules can be oriented by sufficient anchoring strength, and the problems of the related art apparatus and methods can be solved at a time to assure high productivity when compared with that of the related art apparatus and methods and assure sufficient anchoring strength and picture quality. Advantageous Effects

According to the present invention, the productivity is high when compared with that of the related art apparatus and methods, and sufficient anchoring strength and picture quality can be assured. Best Mode for Carrying Out the Invention

In the following, embodiments of the present invention are described suitably with reference to the drawings.

### Embodiment 1

### (1) Configuration and Operation of the Embodiment

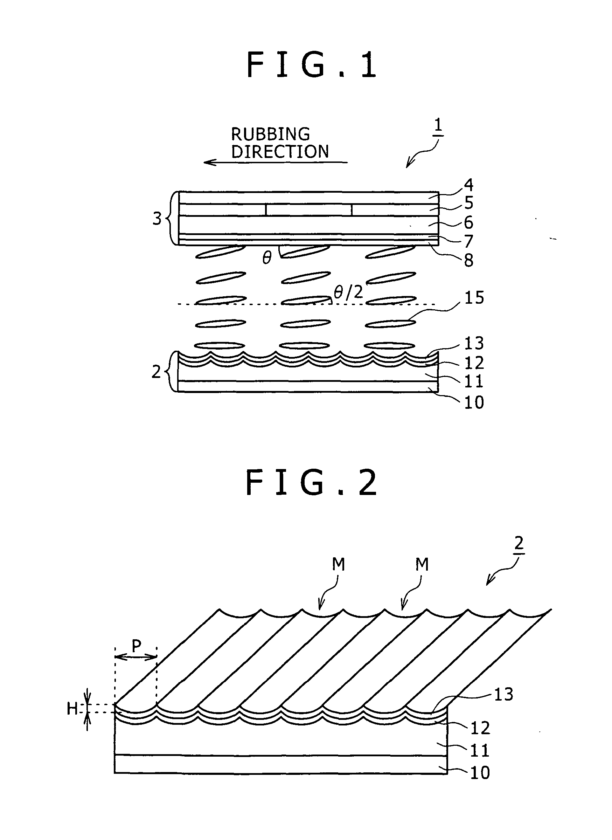

FIG. 1 is a sectional view showing, in a partly enlarged scale, a liquid crystal display panel 1 applied to a liquid crystal display apparatus of an Embodiment 1 of the present invention. The liquid crystal display apparatus of the present embodiment is of the transmission type or of the reflection type, and a polarizing plate and so forth are provided on a front side face of the liquid crystal display panel 1 which is the upper side in FIG. 1 or the like. In the transmission type, a backlight apparatus is provided on the rear face side of the liquid crystal display panel 1 which is the lower side in FIG. 1, but in the reflection type, a frontlight apparatus is provided on the front face side of the liquid crystal display panel 1 which is the upper side in FIG. 1.

The liquid crystal display panel 1 includes liquid crystal sandwiched between a TFT array substrate 2 and a CF substrate 3. Here, the CF substrate 3 is produced by successively forming a color filter 5, an insulating film 6, an electrode 7 in the form of a transparent electrode and an orientation film 8 on a glass substrate 4 which is a transparent insulating substrate. Here, although the electrode 7 is usually formed by forming a film of ITO (Indium Tin Oxide) over an overall area, it may otherwise be formed by patterning for each pixel or for each sub pixel. Meanwhile, the orientation film 8 is produced by applying mixture of soluble polyimide and polyamic acid as a liquid crystal orientation material for inducing horizontal orientation by a printing method and baking the applied mixture for 75 minutes at a temperature of 200 degrees to form a polyimide thin film of a film thickness of 50 [nm] and then carrying out a rubbing process to provide orientation ability. It is to be noted that the direction of the rubbing process is the direction of an arrow mark in this figure and is a direction perpendicular to the extension direction of grooves M hereinafter described.

In contrast, the TFT array substrate 2 is produced by forming TFTs or the like on a glass substrate 10 which is a transparent insulating substrate and forming an insulating film 11 and then successively forming an electrode 12 and an orientation film 13 on the insulating film 11 as seen in FIG. 2.

The TFT array substrate 2 is formed such that the shape of a face thereof on which the orientation film 13 is produced is a groove shape wherein a groove extending linearly in a predetermined direction is formed repetitively in a direction perpendicular to the predetermined direction, and the groove shape is coated with a high-molecular film to form the orientation film 13. Further, in the present embodiment, the surface shape of the insulating film 11 is formed in this groove shape such that the face on which the orientation film 13 is produced is formed in the groove shape.

Here, each of the grooves M has a cross sectional shape formed in a substantially arcuate shape of a symmetrical shape with respect to a vertex of the groove M. Further, each groove M is formed such that the pitch P is 1 [µm] and the height (depth) H is 200 [nm], and consequently the ratio T (= H/P) between the pitch P and the height H is 0.2 which is lower than 1.

More particularly, in the TFT array substrate 2, the insulating film 11 is formed from an organic resist material such as a novolac-based resist material or an acrylic-based resist material, SiO₂, SiN, or an inorganic-based material which includes SiO₂ or SiN as a main component.

Here, where the insulating film 11 is formed from a photosensitive organic resist material, the TFT array substrate 2 is coated with a photosensitive organic resist material and then prebaked, whereafter the resist material is exposed to ultraviolet rays or the like using a mask having a pattern corresponding to the grooves M. Further, development and postbaking are carried out to apply a photolithography method to work the surface of the insulating film 11. It is to be noted that, in place of use of the mask, the exposure process may be carried out utilizing interference of light fluxes irradiated from two different directions. Or, a technique of a nano-printing technique or the like may be used in place of the photolithography method.

On the other hand, where the insulating film 11 is formed from an inorganic-based material, the inorganic material is deposited to a predetermined film thickness on the TFT array substrate 2 by vacuum vapor deposition, sputtering, CVD or the like, and then the photosensitive organic resist material is patterned into grooves by a photolithography method, whereafter wet etching or dry etching is carried out to form side faces of the orientation film 13 into grooves. Also it is possible to produce the insulating film 11 using a material which is formed from mixture of an inorganic-based material and an organic-based material publicly placed on the market and has photosensitivity. In this instance, since a process of baking and so forth is applied after the patterning by the photolithography method, organic-based components disperse into the atmosphere while the insulating film 11 is formed principally from inorganic components.

Meanwhile, in the transmission type apparatus, the electrode 12 is formed normally by forming a film of a transparent electrode material such as ITO over an overall area and then patterning the transparent electrode material. It is to be noted that, in the reflection type apparatus, a metal material such as aluminum or silver may be applied.

The orientation film 13 is formed by applying a polyimide-based material used popularly by an offset printing method and then baking the material at a temperature of 200 degrees for 75 minutes to form a film. By the baking process, high-molecular chains in the orientation film 13 are adjusted to a direction perpendicular to the extension direction of the grooves M so that orientation ability is provided. It is to be noted that, as the application method of the orientation film 13, various techniques can be applied such as a spin coating method, a dipping method of soaking the orientation film 13 in a tank of solution produced by diluting gamma-butyrolactone or acetone, and a method of atomization using a spray.

Here, the orientation film 13 is provided with orientation ability as the direction of high-molecular chains in the orientation film is adjusted, in a process of carrying out application and baking of an orientation material in a state wherein the shape of the surface of an underlying layer is determined as a groove shape, to a direction perpendicular to the extension direction of the grooves M. It is considered that this arises from a factor that, in a process of temperature rise and temperature drop upon baking, the substrate 10 expands and contracts and the high-molecular chains in the orientation film are adjusted to the perpendicular direction by a uniaxial stretching effect, in which stress by the expansion and the contraction acts in a particular direction of the orientation film 13 due to the shape of the grooves.

According to a result of various investigations, it has been found that, in order for molecular axes to be adjusted to a fixed direction by such baking after application as described above, it is necessary for the grooves M, which extend in the direction perpendicular to the fixed direction, to be formed on the lower face of the orientation film 13, and mere projections or concaves and convexes cannot provide orientation ability in the particular direction because molecule axes of the orientation film are disposed to directions from the apexes toward the feet.

Meanwhile, as regards the grooves M, even where the ratio T (= H/P) between the pitch P and the height H is lower than 1, orientation ability can be provided sufficiently, and from a point of view of working the lower face of the orientation film 13 into a groove shape, the productivity can be improved by setting the ratio T between the pitch P and the height H to a value lower than 1, or preferably, by setting the ratio T between the pitch P and the height H to a value lower than 0.5.

The liquid crystal display panel 1 is formed by pasting the TFT array substrate 2 and the CF substrate 3 together by means of a sealing material and injecting nematic liquid crystal having positive dielectric constant anisotropy into a gap between the TFT array substrate 2 and the CF substrate 3. It is to be noted that, in FIG. 1, a liquid crystal molecule is denoted by reference numeral 15, and θ and θ/2 denote tilt angles of the liquid crystal molecule 15. In this instance, when liquid crystal was injected to confirm the orientation direction of the liquid crystal molecules 15, it was confirmed that, on side faces of the TFT array substrate 2, the liquid crystal molecule 15 was oriented to a direction perpendicular to the extension direction of the grooves M, and where the TFT array substrate 2 and the CF substrate 3 were pasted together such that the extension direction of the grooves M extended perpendicularly to the rubbing direction as seen in FIG. 1, the liquid crystal molecules 15 were homogeneously oriented. It is to be noted that it was confirmed that, when the TFT array substrate 2 and the CF substrate 3 were pasted together such that the extension direction of the grooves M extended in parallel to the rubbing direction, the liquid crystal molecules 15 had twisted-nematic orientation.

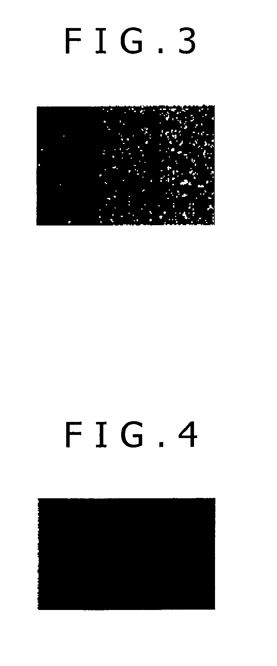

In particular, FIG. 4 is a photograph illustrating a result of observation of one pixel (one set of sub pixels of red, green and blue) of the liquid crystal display panel 1 in contrast to FIG. 3 by means of a polarization microscope where polarizing plates were arranged in cross Nichols arrangement and the liquid crystal display panel 1 having homogeneous orientation was disposed between the polarizing plates and observed. It is to be noted that the liquid crystal display panel 1 was disposed such that the optical axis thereof extended in parallel to the absorption axis of the polarizers. Meanwhile, FIG. 3 illustrates a result of observation, under the same conditions as in the case of FIG. 4, of a liquid crystal display panel according to a conventional grating method wherein liquid crystal molecules were oriented merely utilizing only an elastic deformation effect where the liquid crystal display panel was configured similarly to the liquid crystal display panel 1 while the orientation film 13 on the TFT array substrate 2 side was omitted.

In this instance, if the optical axes of the liquid crystal display panel 1 are adjusted fully, then no phase variation occurs with light incoming from the polarizers, and the light is observed as black. However, if the optical axis is displaced locally, then the light is observed as a gray or white pattern.

According to the observation results of FIGS. 3 and 4, since the observation result of FIG. 4 is observed darker, it can be decided that the liquid crystal display panel 1 of the present embodiment has higher orientation regulating force than that of the conventional liquid crystal display panel according to a grating method wherein only an elastic deformation effect is merely utilized to orient liquid crystal molecules.

Further, in the liquid crystal display panel 1 of the present embodiment, since the ratio T between the pitch P and the height H of the grooves is 0.2 which is equal to or lower than 1, it is possible to simplify the production step of the grooves M remarkably to assure high productivity when compared with the conventional grating method within which it is necessary for the ratio to be equal to or higher than 1 and wherein only an elastic deformation result is merely utilized to orient liquid crystal molecules. Further, various materials having superior characteristics can be applied to fabricate the liquid crystal display panel 1. Furthermore, by providing orientation ability simply and with certainty, various problems of the conventional configuration wherein orientation regulating force which the orientation film material itself has is utilized in the grating method can be eliminated effectively.

Further, from the observation results of FIGS. 3 and 4, it was confirmed that, while, in the liquid crystal display panel 1 of the present embodiment, liquid crystal molecules are oriented to a direction perpendicular to the extension direction of the grooves M on the TFT array substrate 2 side, in the conventional liquid crystal display panel according to the grating method, liquid crystal molecules are oriented to a direction parallel to the extension direction of the grooves M on the TFT array substrate 2 side. Consequently, it was confirmed that the orientation direction of the liquid crystal molecules 15 according to the orientation film 13 of the present embodiment is different from that according to the conventional grating method which utilizes an elastic deformation effects.

Further, when the tilt angle of liquid crystal cells in a homogeneously oriented state was measured by a crystal rotation method, the tilt angle was approximately 1.5 degrees. Here, since the tilt angle of liquid crystal cells where the TFT array substrate 2 and the CF substrate 3 were subjected to a rubbing process is approximately 3 degrees, it is estimated that, in the liquid crystal display panel 1 according to the present embodiment, the tilt angle θ on the surface of the CF substrate 3 is 3 degrees and the tilt angle on the surface of the TFT array substrate 2 is 0 degree.

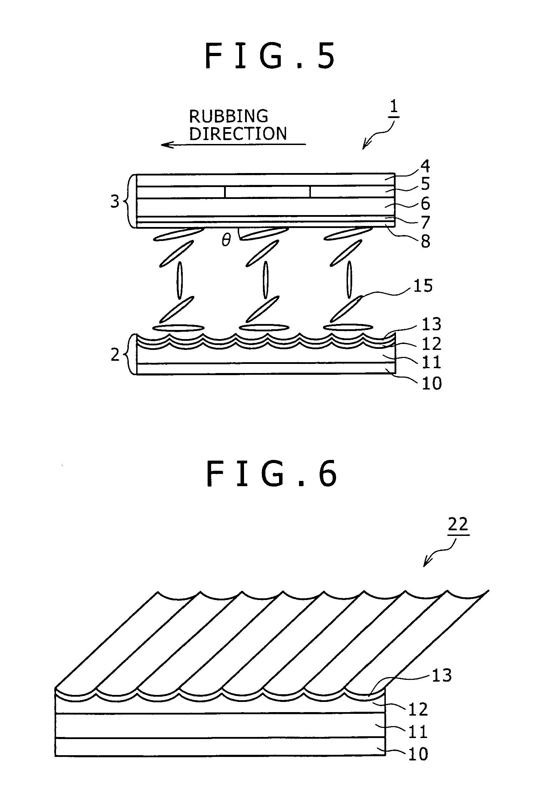

FIG. 5 is a schematic view where a voltage is applied to the liquid crystal display panel 1. Even if a voltage is applied to the liquid crystal display panel 1, in the proximity of an interface of the TFT array substrate 2 and the CF substrate 3, the orientation of liquid crystal molecules does not vary, but as the distance from the interface increases, the tilt angle of the liquid crystal molecule 15 gradually increases until the tilt angle becomes approximately 90 degrees and is in the maximum at a central portion between the TFT array substrate 2 and the CF substrate 3.

The retardation upon application of a voltage was measured by a rotation analyzer method and was compared with the retardation of liquid crystal cells where both of the TFT array substrate 2 and the CF substrate 3 were subjected to a rubbing process. Here, if the anchoring strength is low, then since application of a voltage varies the tilt angle of liquid crystal molecules on the interface of the TFT array substrate 2, the retardation is low when compared with that of liquid crystal cells where both of the TFT array substrate 2 and the CF substrate 3 are subjected to a rubbing process. However, according to a result of measurement, upon voltage application, with the liquid crystal display panel 1 of the present embodiment, retardation substantially equal to that of liquid crystal cells where both of the TFT array substrate 2 and the CF substrate 3 are subjected to a rubbing process is measured. Consequently, it can be confirmed that sufficient anchoring strength is assured by the orientation film 13 of the TFT array substrate 2 side.

It is to be noted that, while it is described above that, in the example of FIG. 1, orientation ability is provided to the orientation film 13 of the TFT array substrate 2 and the orientation film 8 of the CF substrate 3 by the groove shape and the rubbing process, respectively, the present embodiment is not limited to this, but orientation ability may be provided conversely by a rubbing process and a groove shape to the orientation film 13 of the TFT array substrate 2 and the orientation film 8 of the CF substrate 3, respectively. Or, orientation ability may be provided by a groove shape to both of the orientation films 8 and 13 of the TFT array substrate 2 and the CF substrate 3. Further, while, in the example described above with reference to FIG. 1, nematic liquid crystal is applied, various liquid crystals can be applied widely such as smectic liquid crystal and cholesteric liquid crystal.

### (2) Effects of the Embodiment

With the configuration described above, by setting the shape of that face of at least one TFT array substrate 2 from between the two substrates 2 and 3 opposing to each other and holding liquid crystal therebetween on which the orientation film 13 is produced to a groove shape wherein a groove M extending in a predetermined direction is formed repetitively in a direction perpendicular to the predetermined direction and covering the groove shape with a high-molecular film to form the orientation film 13, the productivity is high when compared with that of the related art apparatus and methods, and sufficient anchoring strength and picture quality can be assured.

In particular, by forming the orientation film 13 such that high-molecular chains of the one substrate are adjusted to the perpendicular direction, it is possible to reduce the depth of the grooves to assure sufficient anchoring strength to improve the productivity when compared with the conventional grating method which merely utilizes an elastic deformation effect.

Further, by a uniaxial stretching effect by the grooves, orientation ability can be provided by forming the orientation film 13 such that high-molecular chains are adjusted to the perpendicular direction.

Further, since the value obtained by dividing the depth of the grooves by the pitch of the grooves is lower than 1, high productivity can be assured.

Further, by setting the liquid crystal such that molecules thereof are oriented to the perpendicular direction on the surface of the one substrate, various liquid crystals such as nematic liquid crystal, smectic liquid crystal and cholesteric liquid crystal can be applied widely.

Further, by setting the surface shape of the insulating film 11 formed between the glass substrate 10 and the electrode 12 as a groove shape and setting the shape of the face on which the orientation film 13 is produced as a groove shape, various techniques for working the insulating film 11 can be applied widely so that the productivity is high when compared with that of the related art apparatus and methods and sufficient anchoring strength and picture quality can be assured.

### Embodiment 2

FIG. 6 is a perspective view showing a TFT array substrate of a liquid crystal display panel applied to an Embodiment 2 of the present invention in contrast to FIG. 2. In this TFT array substrate 22, in place of the surface shape of the insulating film 11, the surface shape of the electrode 12 is formed in a groove shape while the shape of the face electrode 12 on which the orientation film 13 is produced is formed in a groove shape. The liquid crystal display panel of the present embodiment is formed similarly to the liquid crystal display panel 1 of the Embodiment 1 except the working of the groove shapes.

In particular, in the TFT array substrate 22 according to the present embodiment, the insulating film 11 is formed with a fixed film thickness on the glass substrate 10 in a similar manner as described hereinabove in connection with the Embodiment 1. Further, after a film of ITO, aluminum, silver or the like is formed subsequently, photosensitive resist is patterned into a groove shape by a photolithography method and then a wet etching process or a dry etching process is carried out to form a groove shape on the electrode 12. It is to be noted that the configuration shown in FIG. 6 may be applied to the CF substrate side similarly as in the description of the Embodiment 1.

Where the surface shape of the electrode 12 is set to a groove shape and the shape of the face on which the orientation film is formed is set to a groove shape in place of the surface structure of the insulating film as in the case of the present embodiment, effects similar to those of the Embodiment 1 can be obtained.

### Embodiment 3

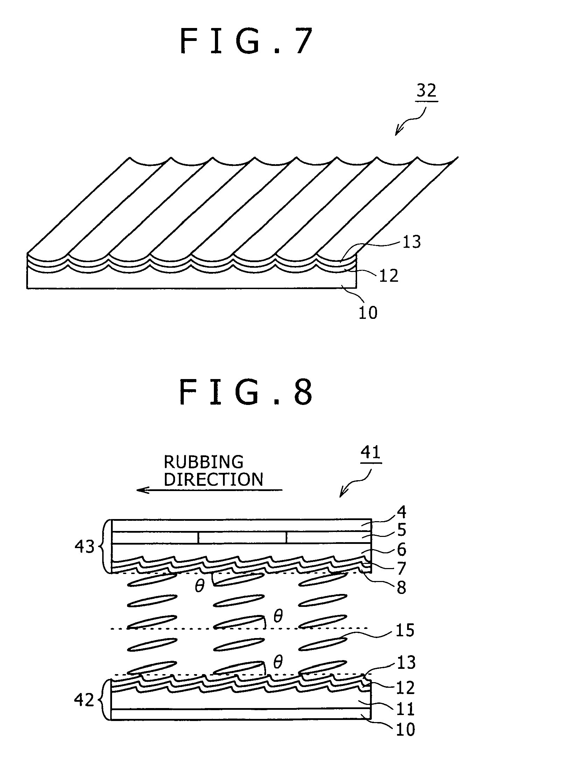

FIG. 7 is a perspective view showing a TFT array substrate of a liquid crystal display panel applied to a liquid crystal display apparatus of an Embodiment 3 of the present invention in contrast to FIG. 2. This TFT array substrate 32 is configured such that, in place of the surface shape of the insulating film 11, the surface shape of the glass substrate 10 which is an insulating substrate is formed directly as a groove shape and the shape of the face of the glass substrate 10 on which the orientation film 13 is produced is formed in a groove shape. The liquid crystal display panel of the present embodiment is formed similarly to the liquid crystal display panel 1 of the Embodiment 1 except that it is different in terms of working of the groove shapes. It is to be noted that, although, in the example of FIG. 7, the insulating film is omitted, an insulating film may be provided as occasion demands.

In particular, in the TFT array substrate 32, after photosensitive resist on the front face of the glass substrate 10 is patterned into grooves by a photolithography method, a wet etching process or a dry etching process is carried out to work the front face of the glass substrate 10 into a groove shape. Thereafter, the electrode 12 and the orientation film 13 are produced successively. It is to be noted that the configuration shown in FIG. 7 may be applied to the CF substrate side similarly as in the description of the Embodiment 1.

Also where the surface shape of the insulating substrate is set to a groove shape and the shape of the face on which the orientation film is produced is set to a groove shape as in the present embodiment in placed of the surface shape of the insulating film, effects similar to those of the Embodiment 1 can be achieved.

### Embodiment 4

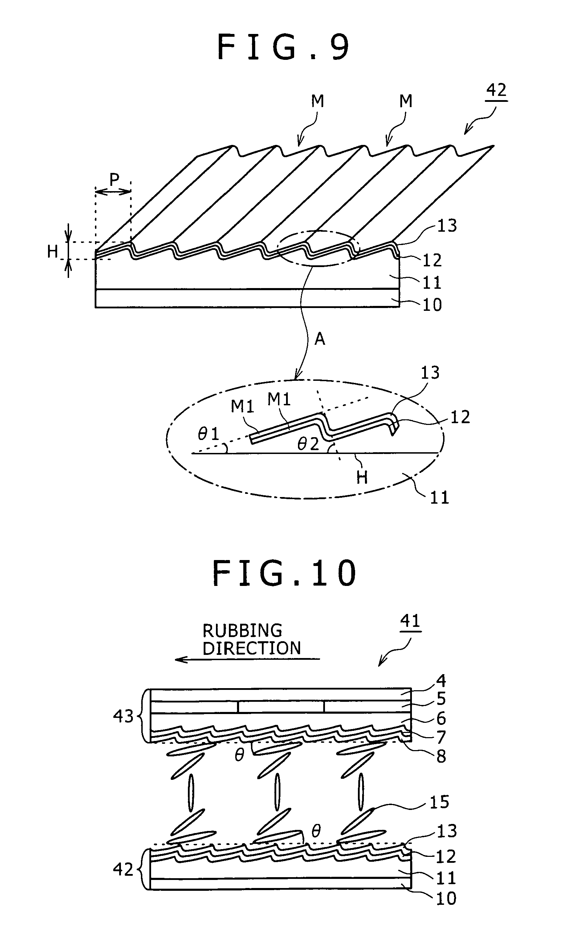

FIG. 8 is a sectional view showing a liquid crystal display panel applied to a liquid crystal display apparatus of an Embodiment 4 of the present invention in contrast to FIG. 1. A liquid crystal display panel 41 of the present embodiment is configured similarly to the liquid crystal display panels of the Embodiment 1 to the Embodiment 3 except that the grooves M formed on a TFT array substrate 42 have a different sectional shape and that a groove shape similar to that of the TFT array substrate 42 is formed also on a CF substrate 43 side. It is to be noted that, in FIG. 8 and in FIGS. 9 and 10 hereinafter described, in order to facilitate understandings, the surface shape of the insulating films 6 and 11 is a groove shape similarly as in the Embodiment 1.

In particular, as seen in FIG. 9, the sectional shape of the TFT array substrate 42 in a direction transverse to the grooves M is formed in an asymmetric shape with respect to the apex of each groove M. Consequently, the liquid crystal display panel 41 controls the tilt angle θ of liquid crystal molecules 15 on the surface of the TFT array substrate 42 to an angle determined by the asymmetric shape.

In particular, in the present embodiment, the TFT array substrate 42 has a groove shape formed such that the grooves M have a sawtooth sectional shape and consequently a rib of a triangular sectional shape defined by a pair of inclined faces M1 and M2 is successively repeated at a predetermined pitch. Consequently, in the TFT array substrate 42, the angles θ1 and θ2 defined by a pair of inclined faces M1 and M2 with respect to a plane H parallel to the surface of the glass substrate 10 are set to different angles to control the tilt angle of the liquid crystal molecules 15. It is to be noted that the sectional shape of the grooves is not limited to that in the case wherein it is a sawtooth shape, but in a word, the grooves can be formed in an asymmetric shape to control the tilt angle of the liquid crystal molecule 15 variously such as where, for example, the apex of each groove M is displaced to one side to obtain an asymmetric shape.

More particularly, in the present embodiment, the grooves M are formed such that the pitch P is 1 [µm] and the height H is 200 [nm] while the angle θ1 is set to 3 degrees. Further, similarly as in the Embodiment 1, the orientation film 13 was formed by applying a polyimide-based material and then baking for 75 minutes at a temperature of 200 degrees so as to have a thickness of 50 [nm]. Also for the CF substrate 43, the orientation film 8 was formed after a groove shape same as that of the TFT array substrate 42 was formed.

The liquid crystal display panel 41 of the present embodiment is formed by pasting the TFT array substrate 42 and the CF substrate 43 together by means of a sealing material and then injecting nematic liquid crystal having positive dielectric constant anisotropy into the gap between the TFT array substrate 42 and the CF substrate 43.

Here, when the orientation direction of the liquid crystal molecule 15 was confirmed in a similar manner to that described hereinabove in connection with the Embodiment 1, it was confirmed that the liquid crystal molecules 15 were directed in a direction perpendicular to the direction in which the groove M extended. Further, it was confirmed that, if the TFT array substrate 42 and the CF substrate 43 were pasted together such that the direction in which the sawtooth shapes of the TFT array substrate 42 successively appeared and the direction in which the sawtooth shapes of the CF substrate 43 successively appeared were opposite to each other, then homogeneous orientation was obtained. However, if the TFT array substrate 42 and the CF substrate 43 were pasted together such that the direction in which the sawtooth shapes of the TFT array substrate 42 successively appeared and the direction in which the sawtooth shapes of the CF substrate 43 successively appeared were the same direction, then Π orientation was obtained.

FIG. 10 is a schematic view where a voltage is applied to the liquid crystal display panel 41. In the liquid crystal display panel 41, even if a voltage is applied, the orientation of liquid crystal molecules does not vary in the proximity of the interface of the TFT array substrate 42 and the CF substrate 43, and as the distance from the interface increases, the tilt angle of liquid crystal molecules 15 gradually increases until the tilt angle becomes approximately 90 degrees and exhibits a maximum value at a central portion between the TFT array substrate 42 and the CF substrate 43. It was confirmed that retardation substantially equal to that of liquid crystal cells wherein both of the TFT array substrate and the CF substrate were subjected to a rubbing process was measured on the liquid crystal display panel 41 in this state, and consequently, the liquid crystal display panel 41 assured sufficient anchoring strength.

With the configuration described above, the tilt angle of liquid crystal molecules can be controlled in various manners by forming the sectional shape in a direction perpendicular to the grooves in an asymmetric shape with respect to the apex of each groove.

### Embodiment 5

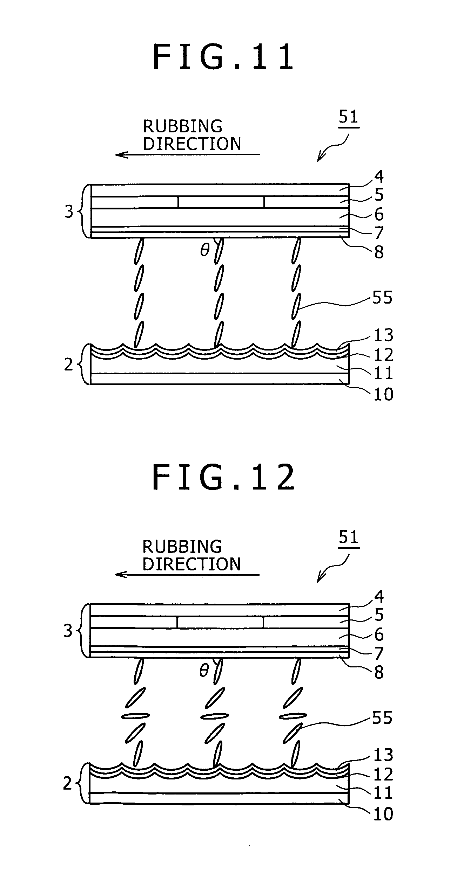

FIG. 11 is a sectional view showing a liquid crystal display panel applied to a liquid crystal display apparatus of an Embodiment 5 of the present invention in contrast to FIG. 1. A liquid crystal display panel 51 of the present embodiment is formed in the same configuration as the liquid crystal display panel 1 of the Embodiment 1 to the Embodiment 3 except that nematic liquid crystal having negative dielectric constant anisotropy is injected between the TFT array substrate 2 and the CF substrate 3 in place of nematic liquid crystal having positive dielectric constant anisotropy and that an orientation film which induces homeotropic orientation is used. It is to be noted that, in this FIG. 11 and in FIG. 12 hereinafter described, in order to facilitate understandings, the surface shape of the insulating film 11 is a groove shape similarly as in the Embodiment 1.

In this instance, it was confirmed that liquid crystal molecules 55 were oriented to a thicknesswise direction of the liquid crystal display panel 51 and have homeotropic orientation.

Here, FIG. 12 is a schematic view where a voltage is applied to the liquid crystal display panel 51. In this liquid crystal display panel 51, even if a voltage is applied, the orientation of the liquid crystal molecules 55 does not vary in the proximity of an interface of the TFT array substrate 2 and the CF substrate 3, and as the distance from the interface increases, the tilt angle of liquid crystal molecules 55 gradually decreases until the tilt angle becomes approximately 0 degree and exhibits a minimum value at a central portion between the TFT array substrate 2 and the CF substrate 3. It was confirmed that the orientation direction of the liquid crystal molecules 55 where the tilt angle was approximately 0 degree was a direction perpendicular to the extension direction of the grooves and the tilt direction depends upon the rubbing direction.

With the present embodiment, even where nematic liquid crystal having negative dielectric constant anisotropy is applied, effects similar to those of the embodiments described hereinabove can be achieved.

### Embodiment 6

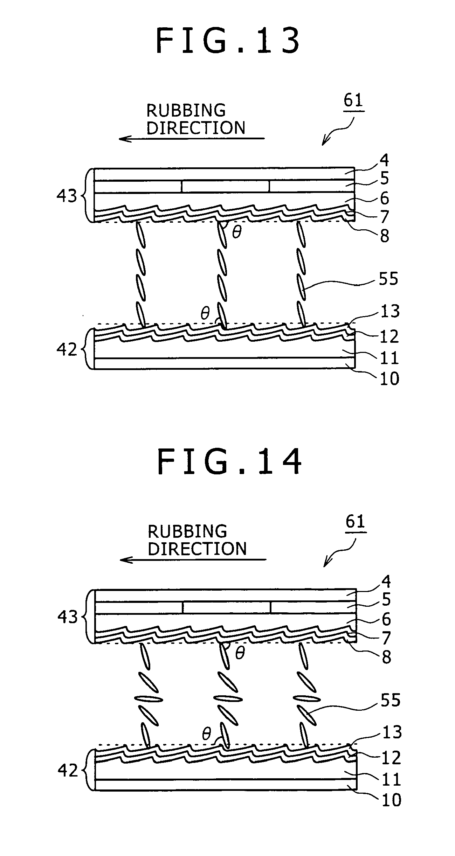

FIGS. 13 and 14 are sectional views showing a liquid crystal display panel applied to a liquid crystal display apparatus of an Embodiment 6 of the present invention in contrast to FIGS. 8 and 10. A liquid crystal display panel 61 of the present embodiment is formed in a same configuration as that of the liquid crystal display panel 41 of the Embodiment 4 except that nematic liquid crystal having negative dielectric constant anisotropy is injected between the TFT array substrate 42 and the CF substrate 43 in place of nematic liquid crystal having positive dielectric constant anisotropy and that an orientation film which induces homeotropic orientation is used. It is to be noted that, in those FIGS. 13 and 14, in order to facilitate understandings, the surface shape of the insulating films 6 and 11 is a groove shape similarly as in FIG. 8.

Also in this instance, it was confirmed that, similarly as in the Embodiment 5, the liquid crystal molecules 55 were oriented in a thicknesswise direction of the liquid crystal display panel 61 and have homeotropic orientation. Further, it was confirmed that, in the proximity of the interface of the TFT array substrate 42 and the CF substrate 43, the liquid crystal molecules 55 were oriented in a vertical direction with respect to the surface of the glass substrate 4 or 10 at a tilt angle in a direction determined by the groove shape.

Further, even if a voltage is applied, the orientation of the liquid crystal molecules 55 does not vary in the proximity of the interface of the TFT array substrate 42 and the CF substrate 43, and as the distance from the interface increases, the tilt angle of the liquid crystal molecules 55 decreases until it becomes almost 0 degree and is in the minimum at a central portion between the TFT array substrate 42 and the CF substrate 43. It was confirmed that the orientation direction of the liquid crystal molecules 55 at which the tilt angle became approximately 0 degree was a direction perpendicular to the extension direction of the grooves.

With the present embodiment, even where nematic liquid crystal having negative dielectric constant anisotropy is applied, effects similar to those of the embodiment 4 described hereinabove can be achieved.

### Embodiment 7

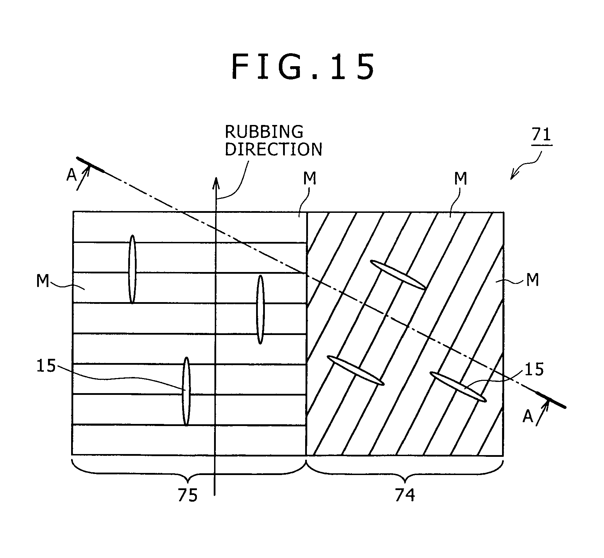

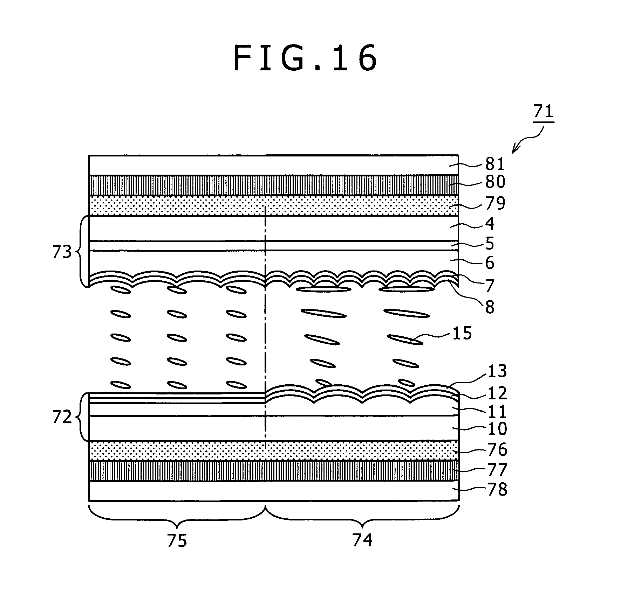

FIG. 15 is a plan view showing a schematic configuration of one pixel of a liquid crystal display panel applied to a liquid crystal display apparatus of an Embodiment 7 of the present invention, and FIG. 16 is a detailed sectional view taken along line A-A showing a liquid crystal display panel 71. It is to be noted that FIG. 15 is a view showing grooves M formed on a CF substrate 73 together with liquid crystal molecules 15.

The liquid crystal display panel 71 is of the half-transmission type and includes a reflection display portion 74 and a transmission display portion 75 provided in one pixel. A quarter-wave plate 76, a half-wave plate 77 and a polarizing plate 78 are successively provided on a lower face of a TFT array substrate 72. Meanwhile, a quarter-wave plate 79, a half-wave plate 80 and a polarizing plate 81 are successively provided on an upper face of the CF substrate 73.

In this TFT array substrate 72, after the insulating film 11, electrode 12 and orientation film 13 are formed successively on the glass substrate 10, a rubbing process is carried out to provide orientation ability to the orientation film 13. On the other hand, in the reflection display portion 74, concave and convex shapes are formed on the insulating film 11 so as to disperse incoming light while the front side faces of the electrode 12 and orientation film 13 are formed in concave and convex shapes.

Meanwhile, in the CF substrate 73, the color filter 5, insulating film 6, electrode 7 and orientation film 8 are successively formed on the glass substrate 4, and the shape of the face on which the orientation film 8 is formed is formed as a groove shape to provide orientation ability to the orientation film 8 similarly to the TFT array substrate described hereinabove in connection with the Embodiment 1 to the Embodiment 4.

Here, in the present liquid crystal display panel 71, the reflection display portion 74 and the transmission display portion 75 are optically designed so as to have the same axial angle and retardation, and the gap between the TFT array substrate 72 and the CF substrate 73 is set to the same distance. Meanwhile, in the transmission display portion 75, the extension direction of the grooves M formed on the CF substrate 73 is set so as to coincide with the rubbing direction of the TFT array substrate 72. On the other hand, in the reflection display portion 74, the extension direction of the grooves M formed on the CF substrate 73 is set so as to be inclined obliquely with respect to the rubbing direction of the TFT array substrate 72.

Consequently, the present liquid crystal display panel 71 can assure different orientation in one pixel readily by means of the reflection display portion 74 and the transmission display portion 75 without provision of an offset in the gap between TFT array substrate 72 and the CF substrate 73. It is to be noted that, in the present embodiment, the transmission display portion 75 has homogeneous orientation and the reflection display portion 74 has 50-degree twisted orientation. It is to be noted that the twist angle of the reflection display portion 74 is not limited to 50 degrees, but the liquid crystal display panel 71 can be configured such that the twist angle is within a range of 40 degrees to 70 degrees. Accordingly, in the present embodiment, although the extension direction of the grooves M on the reflection display portion 74 is set so as to have an angle of 50 degrees with respect to the extension direction of the grooves M on the transmission display portion 75, this angle can be used within a range from 40 degrees to 70 degrees in practical use.

In particular, in a liquid crystal display panel of the semi-transmission type, while, in the transmission display portion, light incoming from the rear face merely passes through and goes out from liquid crystal, in the reflection display portion, incoming light reciprocates in the liquid crystal. Consequently, in order to allow the transmission display portion and the reflection display portion to provide an equal phase difference to outgoing light, it is necessary to set the gap at the reflection display portion to a distance equal to one half that of the transmission display portion, and it is necessary to provide an offset to the liquid crystal side face of the TFT array substrate and/or the CF substrate between the transmission display portion and the reflection display portion.

However, where an offset is provided in this manner, the process is complicated and the productivity is degraded. Also there is a problem that light leakage is caused by the offset and the contrast drops. It is to be noted that, although a method of covering by a metal electrode a boundary of the transmission display portion on the reflection display portion side to intercept light is available for the light leakage, in this instance, an invalid region which is not used for display appears, which makes an obstacle to achieve higher definition.

However, with the present embodiment, the necessity for provision of such an offset as described above is eliminated, and a liquid crystal display panel of a high reflection factor and a high numerical aperture can be formed by a simple and easy process.

It is to be noted that, while, in the present embodiment described above, orientation ability is provided to an orientation film through a groove shape on the CF substrate 73, instead of this, orientation ability may be provided to an orientation film through a groove shape on the TFT array substrate 72. Or, orientation ability may be provided to an orientation film through a groove shape on both of the CF substrate 73 and the TFT array substrate 72. Further, where orientation ability is provided to an orientation film through a groove shape on both of the CF substrate 73 and the TFT array substrate 72, the extension direction of the grooves in the reflection display portion can be inclined with respect to the extension direction of the grooves in the transmission display portion on both or one of the CF substrate 73 and the TFT array substrate 72.

Further, where orientation ability is provided to an orientation film through a groove shape on both of the CF substrate 73 and the TFT array substrate 72 in this manner, the sectional shape of the grooves may be set to an asymmetric shape to control the tilt angle as described hereinabove in connection to the Embodiment 4.

Further, as described hereinabove in connection with the Embodiment 5 and the Embodiment 6, liquid crystal having negative dielectric constant anisotropy may be applied in place of liquid crystal having positive dielectric constant anisotropy.

Further, the inclination of the grooves M may be made different between the transmission display portion and the reflection display portion for each of sub pixels which form one pixel so that the optical characteristic is optimized for each sub pixel. It is to be noted that a configuration wherein an optical characteristic is optimized for each sub pixel in this manner can be applied not only to a semi-transmission type liquid crystal display panel but also to a transmission type liquid crystal display panel and a reflection type liquid crystal display panel. In particular, for example, where the gap between the CF substrate and the TFT array substrate is optimized for the green color, the distance of the gap is excessively great for the blue color and the distance of the gap is excessively small for the red color. Accordingly, in this instance, by making the extension direction of the groove for blue and red sub pixels inclined with respect a green sub pixel, an optical characteristic can be optimized for each sub pixel.

With the configuration described above, by forming one pixel from a transmission display portion and a reflection display portion and making the extension direction of grooves in the reflection display portion inclined with respect to the extension direction of grooves in the transmission display portion, a semi-transmission type liquid crystal display panel of high picture quality can be obtained by a simple process.

### Embodiment 8

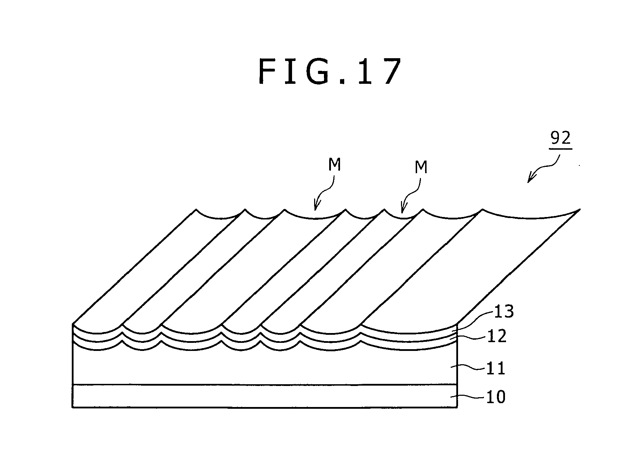

FIG. 17 is a perspective view showing an example of a configuration of a TFT array substrate 92 applied to a liquid crystal display apparatus of an Embodiment 8 of the present invention in contrast to FIG. 2. In the TFT array substrate 92, grooves M are formed such that equal to or more than a fixed number of those grooves M which have a fixed pitch P may not successively appear. More particularly, the TFT array substrate 92 is set such that the pitch P varies at random along successive grooves M. Consequently, the TFT array substrate 92 is set such that successive grooves M do not function as diffraction gratings. The liquid crystal display panel of the present embodiment is formed in a configuration same as that of the embodiments described hereinabove except that the setting of the pitch P of the TFT array substrate 92 is different.

In particular, where the grooves M are formed at a fixed pitch P, the periodical grooves M function as diffraction gratings, and rainbow-colored interference fringes are observed and the picture quality is deteriorated significantly. In the case of a transmission type liquid crystal display panel, since the orientation film contacts with liquid crystal whose refractive index is approximately 1.5, although rainbow-colored interference fringes do not appear as many as those where the grooves M are exposed to the air, they appear since the refractive index of the transparent electrode of ITO or the like is substantially equal to 2. Besides, rainbow-colored interference fringes become marked in the case of a reflection type liquid crystal display panel.

However, if the pitch P is varied at random such that more than a fixed number of grooves M of a fixed pitch P do not appear successively as in the case of the present embodiment, then appearance of such rainbow-colored interference fringes can be prevented thereby to prevent deterioration of the picture quality.

It is to be noted that, while, in the present embodiment described above, a groove shape is formed on the TFT array substrate to provide orientation ability, the prevention method of rainbow-colored interference fringes can be applied also to any of the embodiments described hereinabove and those embodiments hereinafter described.

In the present embodiment since the pitch is varied so that equal to or more than a fixed number of grooves having a fixed pitch do not appear successively, appearance of rainbow-colored interference fringes can be prevented to prevent deterioration of the picture quality.

### Embodiment 9

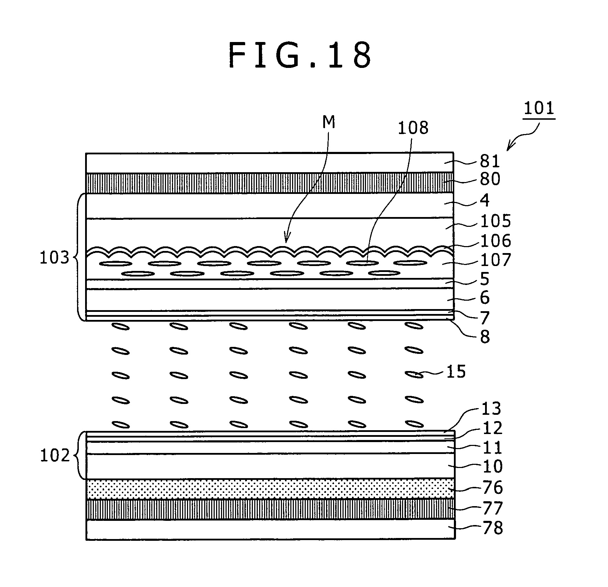

FIG. 18 is a sectional view showing a liquid crystal display panel applied to a liquid crystal display apparatus of an Embodiment 9 of the present invention in contrast to FIG. 16. In a liquid crystal display panel 101 of the present embodiment, like components to those in the embodiments described hereinabove are denoted by like reference characters, and overlapping description is suitably omitted herein. The present liquid crystal display panel 101 is of the transmission type, and a quarter-wave plate 76, a half-wave plate 77 and a polarizing plate 78 are successively provided on a lower face of a TFT array substrate 102. On the other hand, a half-wave plate 80 and a polarizing plate 81 are successively provided on an upper face of a CF substrate 103 to form a quarter-wave plate on the glass substrate 4 of the CF substrate 103.

Here, the CF substrate 103 includes an insulating film 105 and an orientation film 106 successively formed on the glass substrate 4. A face of the CF substrate 103 on which the orientation film 106 is formed is formed in a groove shape in a similar manner to that described hereinabove with reference to the Embodiment 1 to the Embodiment 3 described hereinabove, and a high-molecular material is applied with a fixed film thickness in such a manner as to cover the groove shape. Thereafter, heating and cooling steps are applied to form the orientation film 106.

Thereafter, a nematic liquid crystal material for a phase difference plate is applied to the CF substrate 103, and liquid crystal molecules 108 which form the nematic liquid crystal material are oriented by the orientation film 106 in a direction perpendicular to the extension direction of the grooves M formed on the orientation film 106. Ultraviolet rays are irradiated on the CF substrate 103 in this state to solidify the liquid crystal material to form a quarter-wave plate 107 of the A plate on the glass substrate 4. Thereafter, the color filter 5, insulating film 6, electrode 7 and orientation film 8 are successively formed on the CF substrate 103, and orientation ability is provided to the orientation film 8 by a rubbing method.

In contrast, in the TFT array substrate 102, an insulating film 11, an electrode 12 and an orientation film 13 are successively formed on the glass substrate 10, and orientation ability is applied to the orientation film 13 by a rubbing method.

It is to be noted that, in place of working the surface shape of the insulating film 105 into a groove shape, the surface shape of the glass substrate 4 may be worked into a groove shape as described hereinabove in connection with the Embodiment 3.

With the present embodiment, by orienting liquid crystal molecules by means of a groove shape to produce a quarter-wave plate which is a phase difference plate on insulating substrates between which the liquid crystal is held, the overall thickness can be reduced. Actually, in the present embodiment, the thickness of the quarter-wave plate 107 can be set to several [µm] or less, and the overall thickness can be reduced significantly when compared with that of the related art apparatus and methods. Further, since the technique of photolithography can be applied to form the groove shape with a high degree of accuracy, the extension direction of the grooves can be varied within one pixel to optimize an optical characteristic for each sub pixel of each color and further within one pixel.

### Embodiment 10

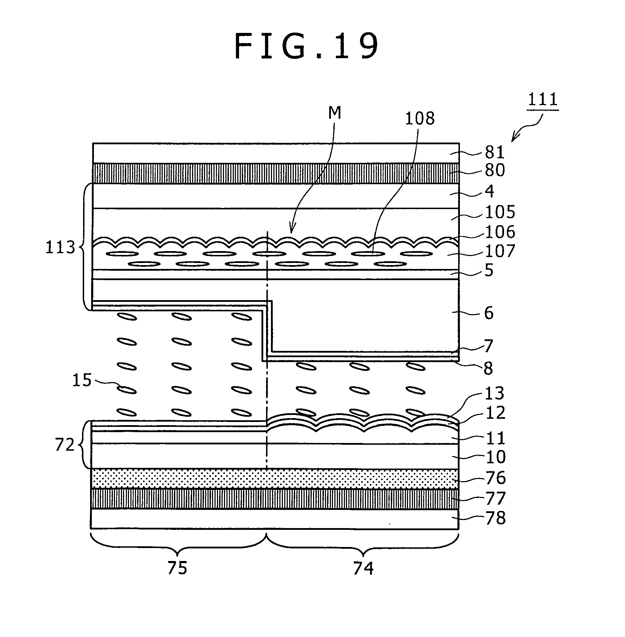

FIG. 19 is a sectional view showing a liquid crystal display panel applied to a liquid crystal display display of an Embodiment 10 of the present invention in contrast to FIGS. 16 and 18. In a liquid crystal display panel 111 of the present embodiment, like components to those in the embodiments described hereinabove are denoted by like reference characters, and overlapping description is suitably omitted herein. The present liquid crystal display panel 111 is of the semi-transmission type and includes pixels each formed from a reflection display portion 74 and a transmission display portion 75. The TFT array substrate 72 is formed in a configuration same as that of the liquid crystal display panel 71 of FIG. 16, and a quarter-wave plate 76, a half-wave plate 77 and a polarizing plate 78 are successively provided on the TFT array substrate 72.

In contrast, a half-wave plate 80 and a polarizing plate 81 are successively provided on an upper face of a CF substrate 113. The CF substrate 113 includes an insulating film 105, an orientation film 106, a quarter-wave plate 107 and a color filter 5 formed on the glass substrate 4 similarly to the CF substrate 103 of the liquid crystal display panel 101. Thereafter, after an insulating film 6 is deposited on the CF substrate 113, for example, a technique of photolithography is applied to selectively remove the CF substrate 113 on the transmission display portion 75 side thereby to form an offset between the transmission display portion 75 and the reflection display portion 74. Thereafter, the electrode 7 and the orientation film 8 are successively formed, and orientation ability is provided to the orientation film 8 by a rubbing method. It is to be noted that the offset between the transmission display portion and the reflection display portion is not restrictively provided on the counter CF substrate, but may be provided on the TFT array substrate side or may be provided on both of them.

It is to be noted that, in place of working the surface shape of the insulating film 105 into a groove shape, the surface shape of the glass substrate 4 may be worked into a groove shape as described hereinabove in connection with the Embodiment 3.

With the present embodiment, even where an offset is provided on a liquid crystal side face of a CF substrate to form a liquid crystal display panel of the transmission type, by orienting liquid crystal molecules by means of a groove shape to produce a quarter wave place, which is a phase difference plate, on insulating substrates between which the liquid crystal is held, effects similar to those of the Embodiment 9 can be achieved.

### Embodiment 11

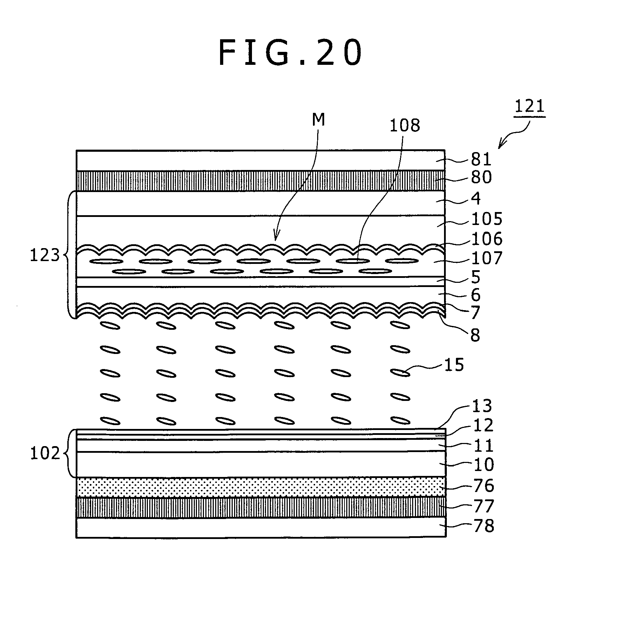

FIG. 20 is a sectional view showing a liquid crystal display panel applied to a liquid crystal display apparatus of an Embodiment 11 of the present invention in contrast to FIGS. 16 to 19. In a liquid crystal display panel 121 of the present embodiment, like components to those in the embodiments described hereinabove are denoted by like reference characters, and overlapping description is suitably omitted herein. The present liquid crystal display panel 121 is of the transmission type, and a TFT array substrate 102 is formed in a configuration same as that of the liquid crystal display panel 101 of FIG. 18 and a quarter-wave plate 76, a half-wave plate 77 and a polarizing plate 78 are successively provided on the TFT array substrate 102.

On the other hand, a CF substrate 123 includes an insulating film 105, an orientation film 106, a quarter-wave plate 107 and a color filter 5 formed on the glass substrate 4 similarly to the CF substrate 103 of the liquid crystal display panel 101. Thereafter, an insulating film 6 is deposited on the CF substrate 123, and the surface shape of the insulating film 6 is worked into a groove shape and an electrode 7 and an orientation film 8 are formed so that orientation ability is provided to the orientation film 8 by the groove shape.

It is to be noted that, in place of working the surface shape of the insulating film 105 into a groove shape, the surface shape of the glass substrate 4 is worked into a groove shape as described hereinabove in connection with the Embodiment 3.

With the present embodiment, even where liquid crystal is oriented by a groove shape, by orienting liquid crystal molecules by the groove shape to produce a quarter-wave plate, which is a phase difference plate, on insulating substrates between which liquid crystal is held, effects similar to those of the Embodiment 9 can be achieved.

### Embodiment 12

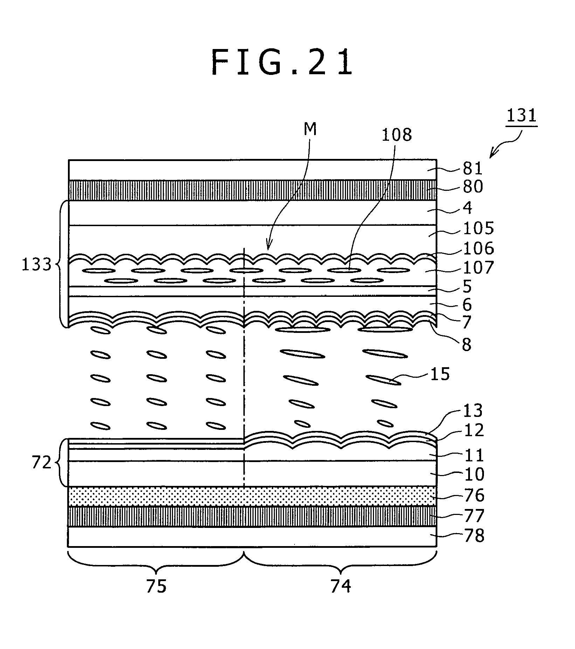

FIG. 21 is a sectional view showing a liquid crystal display panel applied to a liquid crystal display apparatus of the Embodiment 12 of the present invention in contrast to FIGS. 16 to 19. In a liquid crystal display panel 131 of the present embodiment, like components to those in the embodiments described hereinabove are denoted by like reference characters, and overlapping description is suitably omitted herein. The present liquid crystal display panel 131 is of the semi-transmission type, and one pixel is formed from a reflection display portion 74 and a transmission display portion 75. The TFT array substrate 72 is formed in a configuration same as that of the liquid crystal display panel 71 of FIG. 16, and a quarter-wave plate 76, a half-wave plate 77 and a polarizing plate 78 are successively provided on the TFT array substrate 72.

On the other hand, a CF substrate 133 includes a glass substrate 4, an insulating film 105, an orientation film 106, a quarter-wave plate 107 and a color filter 5 formed on the glass substrate 4 similarly to the CF substrate 103 of the liquid crystal display panel 101. Thereafter, an insulating film 6 is deposited on the CF substrate 133, and the surface shape of the insulating film 6 is worked into a groove shape and an electrode 7 and an orientation film 8 are formed so that orientation ability is provided to the orientation film 8 by the groove shape. The CF substrate 133 is formed from the reflection display portion 74 and the transmission display portion 75 such that the gap may be equal similarly to the liquid crystal display panel 71 described hereinabove with reference to FIG. 16. Further, the extension direction of the grooves M formed on a lower face of the orientation film 8 may be a different direction.

With the present embodiment, also where the inclination of grooves in a semi-transmission type liquid crystal display panel is varied to provide a transmission display portion and a reflection display portion with a uniform gap, similar effects to those of the Embodiment 9 can be obtained by orienting liquid crystal molecules by means of the groove shape to produce a quarter-wave plate which is a phase difference plate on insulating substrates between which liquid crystal is held.

### Embodiment 13

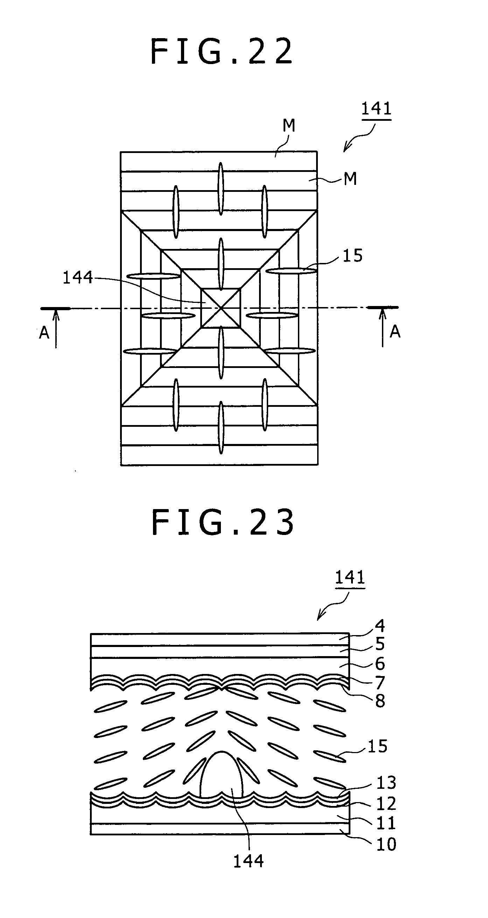

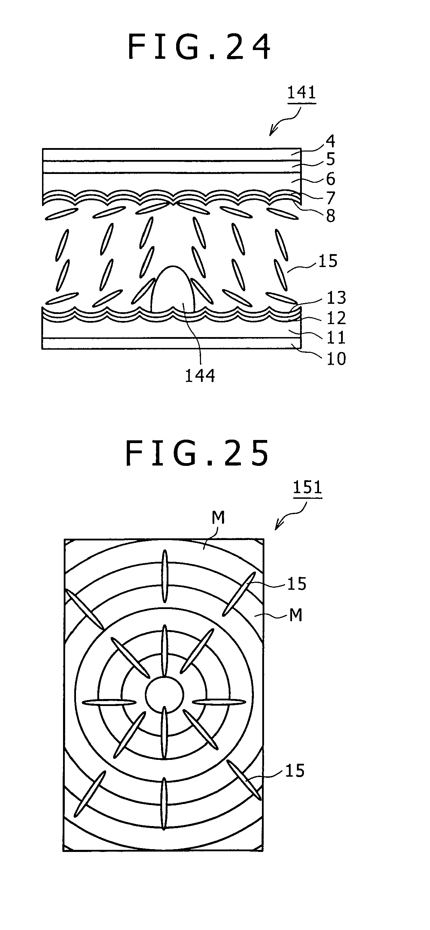

FIG. 22 is a plan view showing a liquid crystal display panel applied to a liquid crystal display apparatus of an Embodiment 13 of the present invention in contrast to FIG. 15, and FIG. 23 is a detailed sectional view showing a liquid crystal display panel 141 taken along line A-A. Further, FIG. 24 is a sectional view showing a state wherein a voltage is applied to an electrode in contrast to FIG. 23. In the liquid crystal display panel 141 of the present embodiment, like components to those in the embodiments described hereinabove are denoted by like reference characters, and overlapping description is suitably omitted herein.

In the liquid crystal display panel 141, to the orientation film 8 of a CF substrate and the orientation film 13 of a TFT array substrate, orientation ability is provided by the groove shape. It is to be noted that, upon production of the groove shape, any of the Embodiment 1 to Embodiment 3 may be applied.

In the liquid crystal display panel 141, grooves M are formed on the CF substrate and the TFT array substrate such that, in upward and downward directions from the center of one pixel, each of them extends horizontally while, in leftward and rightward directions from the center of one pixel, each of them extends vertically, whereby the grooves M are formed in a quadrangular shape centered at the center of a pixel. Consequently, the liquid crystal display panel 141 is set such that the grooves M are formed in a symmetrical shape in various directions with respect to the center of one pixel and, in the upward and downward directions from the center of one pixel, the liquid crystal molecules 15 are oriented in the upward and downward directions while, in leftward and rightward directions from the center of one pixel, the liquid crystal molecules 15 are oriented horizontally such that the liquid crystal molecules 15 are directed to the center of the pixel.

Further, on the liquid crystal display panel 141, a projection 144 of a quadrangular pyramid shape is formed at the center of one pixel on the TFT array substrate such that it projects toward the CF substrate. Consequently, the liquid crystal display panel 141 is set such that the tilt angle decreases as the distance from the center of one pixel increases toward the periphery of the pixel. Consequently, in the liquid crystal display panel 141, the phase of light incoming to the liquid crystal cell from the same polar angle is substantially equal even if the azimuth angle differs, and the liquid crystal display panel 141 is formed such that the viewing angle is expanded.

With the present embodiment, a desired viewing angle can be assured by changing the direction in which grooves extend within one pixel.

In particular, the viewing angle can be expanded by forming the grooves M in a symmetrical shape in various directions with reference to the center of one pixel. It is to be noted that one pixel may be divided into a plurality of sub pixels to form the grooves in a symmetrical shape with reference to the center of each sub pixels.

### Embodiment 14

FIG. 25 is a plan view showing a liquid crystal display panel applied to a liquid crystal display apparatus of the Embodiment 14 of the present invention in contrast to FIG. 22. The present liquid crystal display panel 151 is formed in a configuration same as that of the liquid crystal display panel 141 of the Embodiment 13 except that grooves M are formed concentrically. Consequently, a conical projection is provided in place of the projection of a quadrangular pyramid shape at the center of one pixel.

With the present embodiment, also where the grooves are formed concentrically, similar effects to those of the Embodiment 13 can be obtained.

### Embodiment 15

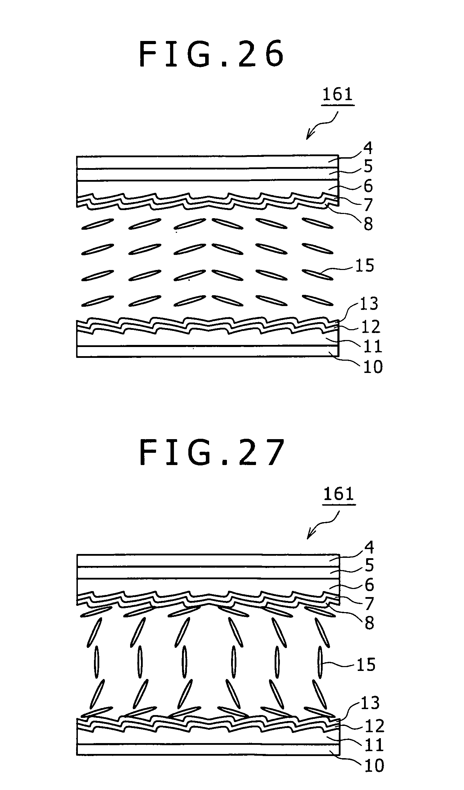

FIGS. 26 and 27 are plan views showing a liquid crystal display panel applied to a liquid crystal display apparatus of an Embodiment 15 of the present invention in contrast to FIGS. 23 and 24. The present liquid crystal display panel 161 is formed in a configuration similar to those of the Embodiment 13 and the Embodiment 14 except that the projection of a quadrangular pyramid shape or a conical shape is omitted and the grooves M are formed in a sectional shape described hereinabove in connection with the Embodiment 4.

With the present embodiment, even where the groove shape is set to an asymmetrical shape to control the tilt angle, similar effects to those of the Embodiment 13 and the Embodiment 14 can be obtained.

### Embodiment 16

It is to be noted that, while, in the Embodiment 8 described above, the pitch of the grooves is varied at random to prevent rainbow-colored interference fringes, according to the present invention, in place of or in addition to this, the groove width may be varied in the extension direction of the grooves to prevent rainbow-colored interference fringes.

Further, while, in the Embodiment 9 to the Embodiment 12 described above, a quarter-wave plate is produced on a CF substrate, the present invention is not limited to this, but can be applied widely also where a half-wave plate, a polarizing plate and other various phase difference plates are produced on the CF substrate. Further, a phase difference plate may be produced on the TFT array substrate side.

Further, while, in the Embodiment 9 to the Embodiment 12 described above, a nematic liquid crystal material is used to produce a phase different plate of the A plate, the present invention is not limited to this, but a liquid crystal material of hybrid orientation may be used to produce a phase difference plate of the O plate and various liquid crystal materials such as smectic, cholesteric and discotic liquid crystals can be applied widely. Further, a phase difference plate of the C plate may be formed by forming an orientation film for inducing vertical orientation and homeotropically orienting liquid crystal molecules.

Further, while, in the Embodiment 10 to the Embodiment 12 described above, grooves are formed uniformly in one pixel to produce a phase difference plate, the present invention is not limited to this, but the extension direction of grooves may be varied in one pixel to optimize the optical characteristic for each sub pixel of each color and further in one pixel.

Further, while, in the Embodiment 10 to the Embodiment 12 described above, a phase difference plate is produced on the liquid crystal side of the insulating substrate, the present invention is not limited to this, but a phase difference plate may be produced on the opposite side to this.

Further, while, in the Embodiment 13 to the Embodiment 15 described above, the extension direction of grooves is varied within one pixel, the present invention is not limited to this, but the extension direction of grooves may be varied within one sub pixel.

Further, while, in the embodiments described above, the techniques of the Embodiment 1 to the Embodiment 4 are selectively applied suitably to form the shape of a face on which an orientation film is formed as a groove shape, the present invention is not limited to this, but any other one of the techniques of the Embodiment 1 to the Embodiment 4 may be applied in place of the techniques described hereinabove in connection with the embodiments within a range within which the configuration described hereinabove in connection with the embodiment is not damaged.

Further, while, in the embodiments described above, a glass plate is used as an insulating substrate, the present invention is not limited to this, but various insulating substrates such as a plastic substrate can be applied widely.

Further, while, in the embodiments described above, an orientation film is coated on a face on which a groove extending in a predetermined direction is repetitively formed in a direction perpendicular to the predetermined direction and high-molecular chains of the orientation film are adjusted to the direction perpendicular to the grooves, an orientation film whose high-molecular chains are adjusted to the direction in which the grooves extend may be applied.

Further, while, in the embodiments described above, an orientation film is coated on a face on which a groove extending in a predetermined direction is repetitively formed in a direction perpendicular to the predetermined direction and liquid crystal molecules are adjusted to the direction perpendicular to the grooves, an orientation film whose liquid crystal molecules are adjusted to the direction in which the grooves extend may be applied.

### Industrial Applicability

The present invention can be applied to a liquid crystal display panel of a liquid crystal mode such as TN, ECB, STN and IPS modes.

### Brief Description of Drawings

[FIG. 1] FIG. 1 is a sectional view showing a liquid crystal display panel applied to a liquid crystal display apparatus of an Embodiment 1 of the present invention.
[FIG. 2] FIG. 2 is a perspective view showing a TFT array substrate applied to the liquid crystal display panel of FIG. 1.
[FIG. 3] FIG. 3 is a photograph illustrating a result of observation of a liquid crystal display panel by a rubbing process.
[FIG. 4] FIG. 4 is a photograph illustrating a result of observation of the liquid crystal display panel of FIG. 1.
[FIG. 5] FIG. 5 is a sectional view illustrating a state wherein a voltage is applied to the liquid crystal display panel of FIG. 1.
[FIG. 6] FIG. 6 is a perspective view showing a TFT array substrate of a liquid crystal display panel applied to a liquid crystal display apparatus of an Embodiment 2 of the present invention.
[FIG. 7] FIG. 7 is a perspective view showing a TFT array substrate of a liquid crystal display panel applied to a liquid crystal display apparatus of an Embodiment 3 of the present invention.
[FIG. 8] FIG. 8 is a sectional view showing a liquid crystal display panel applied to a liquid crystal display apparatus of an Embodiment 4 of the present invention.
[FIG. 9] FIG. 9 is a perspective view showing a TFT array substrate of the liquid crystal display panel of FIG. 8.
[FIG. 10] FIG. 10 is a sectional view illustrating a state wherein a voltage is applied to the liquid crystal display panel of FIG. 8.
[FIG. 11] FIG. 11 is a sectional view showing a liquid crystal display panel applied to a liquid crystal display apparatus of an Embodiment 5 of the present invention.
[FIG. 12] FIG. 12 is a sectional view illustrating a state wherein a voltage is applied to the liquid crystal display panel of FIG. 11.
[FIG. 13] FIG. 13 is a sectional view showing a liquid crystal display panel applied to a liquid crystal display apparatus of an Embodiment 6 of the present invention.
[FIG. 14] FIG. 14 is a sectional view illustrating a state wherein a voltage is applied to the liquid crystal display panel of FIG. 13.
[FIG. 15] FIG. 15 is a plan view showing a general configuration of one pixel of a liquid crystal display panel applied to a liquid crystal display apparatus of an Embodiment 7 of the present invention.
[FIG. 16] FIG. 16 is a detailed sectional view taken along line A-A of FIG. 15.
[FIG. 17] FIG. 17 is a perspective view showing a configuration of a TFT array substrate applied to a liquid crystal display apparatus of an Embodiment 8 of the present invention.
[FIG. 18] FIG. 18 is a sectional view showing a liquid crystal display panel applied to a liquid crystal display apparatus of an Embodiment 9 of the present invention.
[FIG. 19] FIG. 19 is a sectional view showing a liquid crystal display panel applied to a liquid crystal display apparatus of an Embodiment 10 of the present invention.
[FIG. 20] FIG. 20 is a sectional view showing a liquid crystal display panel applied to a liquid crystal display apparatus of an Embodiment 11 of the present invention.
[FIG. 21] FIG. 21 is a sectional view showing a liquid crystal display panel applied to a liquid crystal display apparatus of an Embodiment 12 of the present invention.
[FIG. 22] FIG. 22 is a plan view showing a liquid crystal display panel applied to a liquid crystal display apparatus of an Embodiment 13 of the present invention.
[FIG. 23] FIG. 23 is a sectional view of the liquid crystal display panel of FIG. 22.
[FIG. 24] FIG. 24 is a sectional view illustrating a state wherein a voltage is applied to the liquid crystal display panel of FIG. 22.
[FIG. 25] FIG. 25 is a plan view showing a liquid crystal display panel applied to a liquid crystal display apparatus of an Embodiment 14 of the present invention.
[FIG. 26] FIG. 26 is a sectional view showing a liquid crystal display panel applied to a liquid crystal display apparatus of an Embodiment 15 of the present invention.
[FIG. 27] FIG. 27 is a sectional view illustrating a state wherein a voltage is applied to the liquid crystal display panel of FIG. 26.

### Explanation of Reference Symbols

1, 41, 51, 61, 71, 101, 111, 121, 131, 141, 151, 161 ··· ··· liquid crystal display panel; 2, 22, 32, 42, 72, 92, 102 ··· ··· TFT array substrate; 3, 43, 73, 103, 113, 123, 133 ··· ··· CF substrate; 4, 10 ··· ··· lass substrate; 5 ··· ··· color filter; 6, 11, 105 ··· ··· insulating film; 7, 12 ··· ··· electrode; 8, 13, 106 ··· ··· orientation film; 15, 55, 108 ··· ··· liquid crystal molecule; 74 ··· ··· reflection display portion; 75 ··· ··· transmission display portion; 76, 79, 107 ··· ··· quarter-wave plate; 77, 80 ··· ··· alf-wave plate; 78, 81 ··· ··· polarizing plate; 144 ··· ··· projection, M ··· ··· groove

## Claims

1. A liquid crystal display panel wherein liquid crystal is held between two substrates opposing to each other, **characterized in that**
at least one of said two substrates
is formed such that the shape of a face on which an orientation film is produced is a groove shape wherein a groove extending in a predetermined direction is formed repetitively in a direction perpendicular to the predetermined direction, and
said groove shape is covered with a high-molecular film to form said orientation film whose high-molecular chains are adjusted to the perpendicular direction.

2. The liquid crystal display panel according to claim 1, **characterized in that**
said orientation film of the one substrate
is formed such that the high-molecular chains are adjusted to the perpendicular direction by a uniaxial stretching effect by the groove.

3. The liquid crystal display panel according to claim 1, **characterized in that**
a resulting value when the depth of the groove is divided by a pitch of the groove is lower than 1.

4. The liquid crystal display panel according to claim 1, **characterized in that**
molecules of the liquid crystal
are oriented to the perpendicular direction.

5. The liquid crystal display panel according to claim 1, **characterized in that**
the one substrate
is formed such that a surface shape of an insulating film provided on the opposite side of said orientation film to said liquid crystal side is formed in the groove shape and the shape of a face on which said orientation film is produced is formed in the groove shape.

6. The liquid crystal display panel according to claim 1, **characterized in that**
the one substrate
is formed such that a surface shape of an electrode provided on the opposite side of said orientation film to said liquid crystal side is formed in the groove shape and the shape of a face on which said orientation film is produced is formed in the groove shape.

7. The liquid crystal display panel according to claim 1, **characterized in that**
the one substrate
is formed such that a surface shape of an insulating substrate provided on the opposite side of said orientation film to said liquid crystal side is formed in the groove shape and the shape of a face on which said orientation film is produced is formed in the groove shape.

8. The liquid crystal display panel according to claim 1, **characterized in that**
the groove
is formed such that the sectional shape in a direction transverse to the groove is formed in a symmetrical shape with respect to an apex of the groove.

9. The liquid crystal display panel according to claim 1, **characterized in that**
the groove
is formed such that the sectional shape in a direction transverse to the groove is formed in an asymmetrical shape with respect to an apex of the groove.

10. The liquid crystal display panel according to claim 1, **characterized in that**
the groove shape
has a sawtooth sectional shape in a direction transverse to the groove, and
is set such that a pair of adjacent faces which form the sawtooth shape have different angles with respect to a plane parallel to the surface of said insulating substrate to set the tilt angle of liquid crystal molecules on the surface of the one substrate.

11. The liquid crystal display panel according to claim 1, **characterized in that**
said liquid crystal is nematic liquid crystal having positive dielectric constant anisotropy, and
when a voltage is applied to electrodes provided on said two substrates, while molecules of said liquid crystal on the surfaces of said two substrates remain oriented to a direction parallel to the surfaces of said substrates, molecules of said liquid crystal at a central portion between said two substrates are oriented to a direction perpendicular to the surfaces of said substrates.

12. The liquid crystal display panel according to claim 1, **characterized in that**
said liquid crystal is nematic liquid crystal having negative dielectric constant anisotropy, and
when a voltage is applied to electrodes provided on said two substrates, while molecules of said liquid crystal on the surfaces of said two substrates remain oriented to a direction vertical to the surfaces of said substrates, molecules of said liquid crystal at a central portion between said two substrates are oriented to a direction parallel to the surfaces of said substrates and to the perpendicular direction.

13. The liquid crystal display panel according to claim 1, **characterized in that**
one pixel is formed from a transmission display portion and a reflection display portion, and
the extension direction of the groove in said reflection display portion is set so as to be inclined with respect to the extension direction of the groove in said transmission display portion.

14. The liquid crystal display panel according to claim 1, **characterized in that**
the groove is formed such that the pitch varies between successive ones so that a number of successive grooves equal to or greater than a fixed number do not have a fixed pitch.

15. The liquid crystal display panel according to claim 1, **characterized in that**
an orientation film for a phase difference plate having a face on which a groove extending in a predetermined direction is formed repetitively in a direction perpendicular to the predetermined direction and which is covered with a high-molecular film, and a phase difference plate formed from liquid crystal orientated to a direction determined by said orientation film for said phase difference plate are successively formed on at least one of said two substrates.

16. The liquid crystal display panel according to claim 1, **characterized in that**
the direction in which the groove extends varies in one pixel or one sub pixel.

17. The liquid crystal display panel according to claim 16, **characterized in that**
the groove is formed in a symmetrical shape in various directions with reference to the center of one pixel or one sub pixel.

18. A liquid crystal display panel wherein liquid crystal is held between two substrates opposing to each other, **characterized in that**
at least one of said two substrates
is formed such that the shape of a face on which an orientation film is produced is a groove shape wherein a groove extending in a predetermined direction is formed repetitively in a direction perpendicular to the predetermined direction, and
said groove shape is covered with a high-molecular film to form said orientation film which orients molecules of said liquid crystal to the perpendicular direction.

19. The liquid crystal display panel according to claim 18, **characterized in that**
said orientation film of the one substrate
is formed such that the high-molecular chains are adjusted to the perpendicular direction by a uniaxial stretching effect by the groove.

20. The liquid crystal display panel according to claim 18, **characterized in that**
a resulting value when the depth of the groove is divided by a pitch of the groove is lower than 1.

21. The liquid crystal display panel according to claim 18, **characterized in that**
the one substrate
is formed such that a surface shape of an insulating film provided on the opposite side of said orientation film to said liquid crystal side is formed in the groove shape and the shape of a face on which said orientation film is produced is formed in the groove shape.

22. The liquid crystal display panel according to claim 18, **characterized in that**
the one substrate
is formed such that a surface shape of an electrode provided on the opposite side of said orientation film to said liquid crystal side is formed in the groove shape and the shape of a face on which said orientation film is produced is formed in the groove shape.

23. The liquid crystal display panel according to claim 18, **characterized in that**
the one substrate
is formed such that a surface shape of an insulating substrate provided on the opposite side of said orientation film to said liquid crystal side is formed in the groove shape and the shape of a face on which said orientation film is produced is formed in the groove shape.

24. The liquid crystal display panel according to claim 18, **characterized in that**
the groove
is formed such that the sectional shape in a direction transverse to the groove is formed in a symmetrical shape with respect to an apex of the groove.

25. The liquid crystal display panel according to claim 18, **characterized in that**
the groove
is formed such that the sectional shape thereof in a direction transverse to the groove is formed in an asymmetrical shape with respect to an apex of the groove.

26. The liquid crystal display panel according to claim 18, **characterized in that**
the groove shape
has a sawtooth sectional shape in a direction transverse to the groove, and
is set such that a pair of adjacent faces which form the sawtooth shape have different angles with respect to a plane parallel to the surface of said insulating substrate to set the tilt angle of liquid crystal molecules on the surface of the one substrate.

27. The liquid crystal display panel according to claim 18, **characterized in that**
said liquid crystal is nematic liquid crystal having positive dielectric constant anisotropy, and
when a voltage is applied to electrodes provided on said two substrates, while molecules of said liquid crystal on the surfaces of said two substrates remain oriented to a direction parallel to the surfaces of said substrates, molecules of said liquid crystal at a central portion between said two substrates are oriented to a direction perpendicular to the surfaces of said substrates.

28. The liquid crystal display panel according to claim 18, **characterized in that**
said liquid crystal is nematic liquid crystal having negative dielectric constant anisotropy, and
when a voltage is applied to electrodes provided on said two substrates, while molecules of said liquid crystal on the surfaces of said two substrates remain oriented to a direction vertical to the surfaces of said substrates, molecules of said liquid crystal at a central portion between said two substrates are oriented to a direction parallel to the surfaces of said substrates and to the perpendicular direction.

29. The liquid crystal display panel according to claim 18, **characterized in that**
one pixel is formed from a transmission display portion and a reflection display portion, and
the extension direction of the groove in said reflection display portion is set so as to be inclined with respect to the extension direction of the groove in said transmission display portion.

30. The liquid crystal display panel according to claim 18, **characterized in that**
said grooves are formed such that the pitch varies between successive ones so that a number of successive grooves equal to or greater than a fixed number do not have a fixed pitch.

31. The liquid crystal display panel according to claim 18, **characterized in that**
an orientation film for a phase difference plate having a face on which a groove extending in a predetermined direction is formed repetitively in a direction perpendicular to the predetermined direction and which is covered with a high-molecular film, and a phase difference plate formed from liquid crystal orientated to a direction determined by said orientation film for said phase difference plate are formed successively on at least one of said two substrates.

32. The liquid crystal display panel according to claim 18, **characterized in that**
the direction in which the groove extends varies in one pixel or one sub pixel.

33. The liquid crystal display panel according to claim 32, **characterized in that**
the groove is formed in a symmetrical shape in various directions with reference to the center of one pixel or one sub pixel.

34. A liquid crystal display panel wherein liquid crystal is held between two substrates opposing to each other, **characterized in that**
at least one of said two substrates includes
an insulating substrate, and
an orientation film for a phase difference plate having a face on which a groove extending in a predetermined direction is formed repetitively in a direction perpendicular to the predetermined direction and which is covered with a high-molecular film such that high-molecular chains are adjusted to the perpendicular direction and
a phase difference plate formed from liquid crystal oriented in a direction determined by said orientation film for said phase difference plate
are successively formed on said insulating substrate.

35. A liquid crystal display panel wherein liquid crystal is held between two substrates opposing to each other, **characterized in that**
at least one of said two substrates includes
an insulating substrate, and
an orientation film for a phase difference plate having a face on which a groove extending in a predetermined direction is formed repetitively in a direction perpendicular to the predetermined direction and which is covered with a high-molecular film and
a phase difference plate formed from liquid crystal whose molecules are oriented to the perpendicular direction
are successively formed on said insulating substrate.

36. A fabrication method for a liquid crystal display panel wherein liquid crystal is held between two substrates opposing to each other, **characterized in that**
the fabrication method for a liquid crystal display panel comprises
a groove working step of working at least one of the two substrates such that the shape of a face on which an orientation film is to be produced is a groove shape wherein a groove extending in a predetermined direction is formed repetitively in a direction perpendicular to the predetermined direction, and
an orientation film production step of covering the groove shape with a high-molecular film to form the orientation film whose high-molecular chains are adjusted to the perpendicular direction.

37. A fabrication method for a liquid crystal display panel wherein liquid crystal is held between two substrates opposing to each other, **characterized in that**
the fabrication method for a liquid crystal display panel comprises
a groove working step of working at least one of the two substrates such that the shape of a face on which an orientation film is to be produced is a groove shape wherein a groove extending in a predetermined direction is formed repetitively in a direction perpendicular to the predetermined direction, and
an orientation film production step of covering the groove shape with a high-molecular film to form the orientation film which orients molecules of the liquid crystal to the perpendicular direction.

38. A fabrication method for a liquid crystal display panel wherein liquid crystal is held between two substrates opposing to each other, **characterized in that**
at least one of the two substrates
includes an orientation film for a phase difference plate and a phase difference plate successively provided on a transparent substrate, and
the fabrication method for a liquid crystal display panel comprises
a groove working step of working the one substrate such that the shape of a face on which the orientation film is to be produced is a groove shape wherein a groove extending in a predetermined direction is formed repetitively in a direction perpendicular to the predetermined direction,
an orientation film production step of covering the groove shape with a high-molecular film to form the orientation film for the phase difference plate whose high-molecular chains are adjusted to the perpendicular direction,
a liquid crystal arranging step of arranging liquid crystal on the orientation film of the phase difference plate, and
a solidifying step of solidifying the liquid crystal.

39. A fabrication method for a liquid crystal display panel wherein liquid crystal is held between two substrates opposing to each other, **characterized in that**
at least one of the two substrates
includes an orientation film and a phase difference plate successively provided on a transparent substrate, and
the fabrication method for a liquid crystal display panel comprises
a groove working step of working the one substrate such that the shape of a face on which the orientation film is to be produced is a groove shape wherein a groove extending in a predetermined direction is formed repetitively in a direction perpendicular to the predetermined direction,
an orientation film production step of covering the groove shape with a high-molecular film to form the orientation film for the phase difference plate,
a liquid crystal arranging step of arranging liquid crystal, whose molecules are oriented to the perpendicular direction, on the orientation film of the phase difference plate, and
a solidifying step of solidifying the liquid crystal.

40. A liquid crystal display panel wherein liquid crystal is held between two substrates opposing to each other, **characterized in that**
at least one of said two substrates
is formed such that the shape of a face on which an orientation film is produced is a groove shape wherein a groove extending in a predetermined direction is formed repetitively in a direction perpendicular to the predetermined direction, and
said groove shape is covered with a high-molecular film to form the orientation film whose high-molecular chains are adjusted to the predetermined direction.

41. A liquid crystal display panel wherein liquid crystal is held between two substrates opposing to each other, **characterized in that**
at least one of said two substrates
is formed such that the shape of a face on which an orientation film is produced is a groove shape wherein a groove extending in a predetermined direction is formed repetitively in a direction perpendicular to the predetermined direction, and
said groove shape is covered with a high-molecular film to form the orientation film which orients molecules of the liquid crystal to the perpendicular direction.
